# EUROPEAN PATENT APPLICATION

(11) **EP 1 641 251 A1**
(43) Date of publication of application: **29.03.2006**
(21) Application number: 04022576.5
(22) Date of filing: 22.09.2004
(51) Int. Cl.: H04N 5/44

(54) **Portable device for watching TV program**

(71) Applicant: Inventec Appliances Corp., Wugu Shiang, Taipei (TW)
(72) Inventor: Ting, Kevin, Taipei Hsien (TW)
(74) Representative: Schaeberle, Steffen

(57) **Abstract**

A portable device (10) for watching and recording TV programs includes a receiving module (12), a decoding module (14), an encoding module (18), a storing module (24), and a displaying module (20). Video/audio signals received by the receiving module (12) are decoded by the decoding module (14) and transformed to images and sounds by the displaying module (20), and/or the decoded video/audio signals are encoded in MPEG4 codes and stored in the storing module (24). Another portable device (30) for watching TV programs includes a TV tuner (32), an image decoder (34) connected to the TV tuner (32), an encoder (40) connected to a CPU (48) and the image decoder (34) for encoding the first decoding signal and outputting a digital signal, and a memory (44) connected to the CPU (48) and the encoder (40) for storing the digital signal.

## Description

The present invention relates to a portable device for watching TV programs according to the pre-characterizing of claims 1 and 11.

A TV program or a radio program today is live broadcasted. Thus, programs are normally shown at specific times. If one wants to watch a specific TV program but he or she is being occupied by other business, he or she will miss it. To solve the problem, recording technology was developed.

However, the recording technology is not completely satisfying. People prefer to watch some live programs, like sports games or important news, immediately rather than watch them after the results are known. As for news about bad weather, like storms or typhoons, the situation should be monitored whenever and wherever. Therefore, while it may be desirous to bring a TV set with someone, a conventional TV set is too huge to take.

Prior art recording methods have some additional disadvantages. If the show time of one program is not properly predicted, the TV recording system is not properly set up, or there are some problems in the TV recording system, the program would not be recorded.

Finally, a conventional TV signal is analog signal, so the recording system records and stores the analog signal, which is not suitable for long-term preservation. For the latest digital solution for a TV system, a digital signal is received and stored. However, the stored data is stored directly from the received digital signal without being compressed, resulting in large amounts of data. Therefore, a portable device for watching TV programs and for decoding the received data into suitable codes for storage is needed.

This in mind, the present invention aims at providing a portable device for conveniently watching and/or recording TV programs.

The potable device for watching TV programs according to claims 1 and 11 achieves this. The respective dependent claims pertain to corresponding further developments and improvements.

As will be seen more clearly from the detailed description following below, the claimed invention includes a receiving module, a first decoding module, an encoding module, a storing module, and a displaying module. The receiving module is for receiving an input signal. The first decoding module is connected to the receiving module for decoding the input signal and outputting a first decoded signal. The encoding module is used to encode the signal and has an input for receiving a signal and an output for outputting a digital signal. The storing module is connected to the output of the encoding module and is used for storing the digital signal output from the encoding module. The displaying module is connected to the first decoding module for transforming the first decoded signal or a second decoded signal into an audio/video signal and displaying the audio/video signal.

In the following, the invention is further illustrated by way of example, taking reference to the accompanying drawings. Thereof
Fig.1 illustrates a TV system according to the prior art,
Fig.2 illustrates a portable device for watching TV programs according to the present invention, and
Fig.3 illustrates another portable device for watching TV programs according to the present invention.

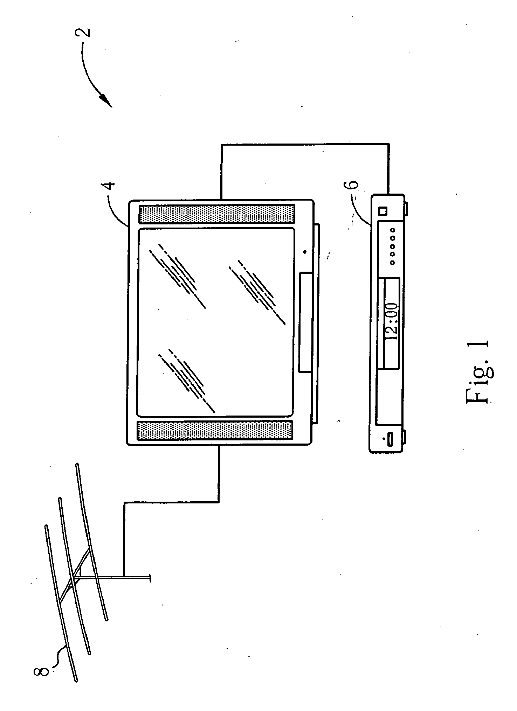

Please refer to Fig.1, which illustrates a TV system 2 according to the prior art. TV system 2 comprises a display 4, a recording system 6, and an antenna 8. The antenna 8 and the recording system 6 are connected to the display 4. The antenna 8 receives an electro-magnetic input signal and passes it to the display 4. The display 4 transforms the received signal into a video signal and displays it on the display. In addition, the input signal may also be delivered to the recording system 6 so that the input signal is stored and can be played at a later time.

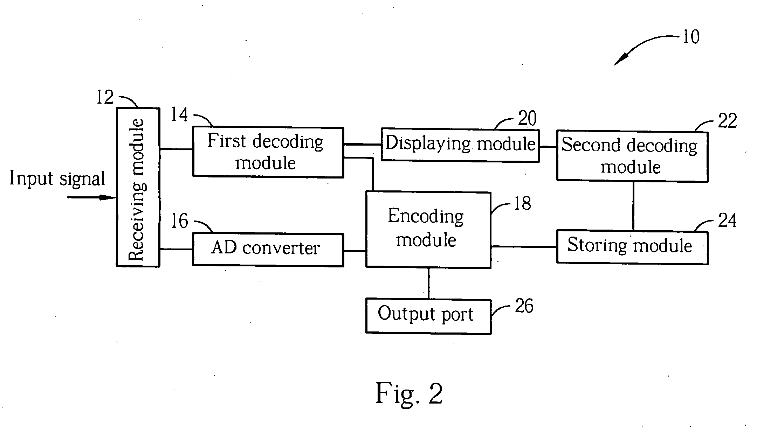

Now, please refer to Fig.2, which illustrates a portable device 10 for watching TV programs according to the present invention. The portable device 10 comprises a receiving module 12, a first decoding module 14, an AD converter 16, an encoding module 18, a displaying module 20, a second decoding module 22, a storing module 24, and an output port 26. The receiving module 12 is used to receive an input signal, which is an audio/video signal, such as RF signals received by a TV antenna or FM/AM radio signals in the preferred embodiment of the invention. The transmitted signals are usually encoded or modulated, so the signals after received should be sent to the first decoding module 14 for decoding.

If the receiving module 12 receives an analog signal, the analog signal should be transformed to a digital signal by the AD converter 16 for subsequent data processing. The encoding module 18 comprises two inputs and two outputs. One input of the encoding module 18 is connected to one output of first decoding module 14 and receives the decoded signals from the first decoding module 14. The encoding module 18 encodes the received decoded signals by the first decoding module 14. The other input of encoding module 18 is connected to the output of the AD converter 16 for receiving and then encoding the output digital signals of the AD converter 16. The encoding module 18 is to encode the input digital signal to another format more suitable for storage. In the preferred embodiment of the present invention, the encoding module 18 uses an MPEG4 encoding method.

One of two outputs of the encoding module 18 is connected to the storing module 24 and the other output is connected to the output port 26. The storing module 24 is used to store the data encoded by the encoding module 18. The output port 26 is used to output the data in the storing module 24 to other apparatuses or systems. For example, the output port 26 may pass the stored data to a computer. In the preferred embodiment of the present invention, the output port 26 is a USB port.

The displaying module 20 is connected to the first decoding module 14 and the second decoding module 22 for displaying the decoded signals of the first decoding module 14 and second decoding module 22. The displaying module 20 can be an LCD, a monitor, a display of a PDA, or a speaker. In the portable device for watching TV programs according to the present invention, there are two types of programs provided for users. The first type of program is received from a wireless RF signal by an antenna and then directly decoded by the first decoding module 14. The first type of program is live displayed. The second type of program is stored in the storing module 24 and decoded by the second decoding module 22. The second type of program is displayed after it is recorded. Therefore, the first decoding module 14 is used to transform the signal received by the receiving module 12 into the audio/video signal for displaying, and the second decoding module 22 is used to decode the compressed codes in the storing module 14 into the signal for displaying.

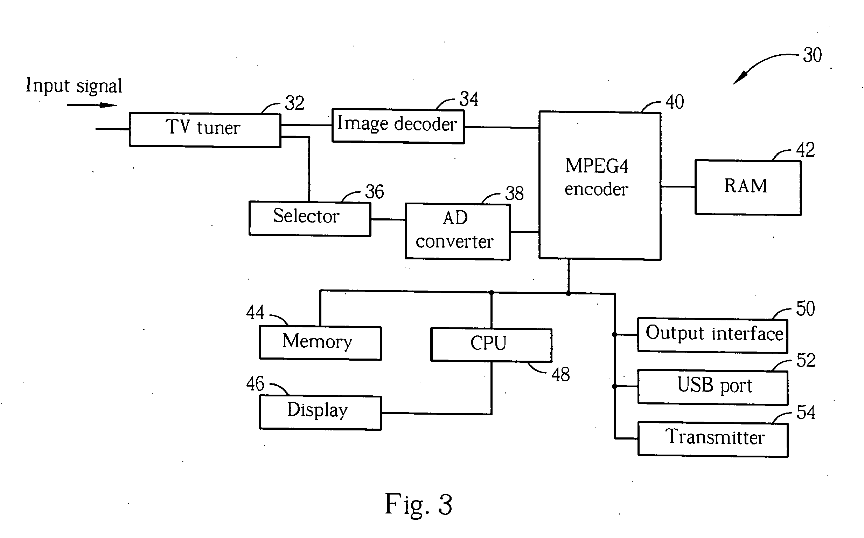

Please refer to Fig.3. Fig.3 illustrates another embodiment of the portable device for watching TV programs 30 according to the present invention. The portable device for watching TV programs 30 comprises a TV tuner 32, an image decoder 34, a selector 36, an AD converter 38, an MPEG4 encoder 40, a RAM 42, a memory 44, a display 46, a CPU 48, an output interface 50, a USB port 52, and transmitter 54. The TV tuner 32 is used to select a frequency band of an image signal and receive it. The image decoder 34 is to decode the output signal of the TV tuner 32 and pass it to the MPEG4 encoder 40. The selector 36 connected to the AD converter 38 is used to choose an audio or a video signal sent to the AD converter 38 so that the audio or the video signal is transformed to a digital signal in the AD converter 38. The digital signal can be directly used for displaying on the display 46 or be encoded by the MPEG4 encoder 40. The MPEG4 encoder 40 is used to compress data into MPEG4 code. The RAM 42 is a buffer for the MPEG4 encoder 40.

As shown in Fig.3, the MPEG4 encoder 40 is additionally connected to the memory 44, the CPU 48, the output interface 50, the USB port 52, and the transmitter 54. The memory 44 is used to store the encoded data from the MPEG4 encoder 40. The encoded data can be delivered to other systems or apparatuses for data sharing through the USB port 52, the transmitter 54, or the output interface 50.

In the prior art, when some important news should be monitored whenever and wherever, it was often necessary to bring a TV set along with someone, but a conventional TV set is too huge to conveniently take. As for the recording method, if the show time of one program is not properly predicted, the TV recording system is not properly set up, or there are some problems in TV recording system, the program would not be recorded completely or correctly. Furthermore, a recording system of a conventional TV records and stores the analog signal, which is not suitable for long-term conservation. For the latest digital solution of a TV system, the data amount is too large for practical storage. Compared to the prior art, the portable device for watching TV programs in the present invention comprises a receiving module, a decoding module, an encoding module, a storing module, and a displaying module that can be utilized to watch TV as well as record programs in any place and at any time. Therefore, the portable device of the present invention has the advantages of providing an easier way to watch TV and record programs.

## Claims

1. A portable device (10) for watching TV programs, the portable device (10) comprising:
a receiving module (12) for receiving an input signal; and
a first decoding module (14) connected to the receiving module (12) for decoding the input signal and outputting a first decoded signal;
**characterized by**:
a displaying module (20) connected to the first decoding module (14) for transforming the first decoded signal or a second decoded signal into an audio/video signal and displaying the audio/video signal;
an encoding module (18) comprising an input for receiving a signal, the encoding module (18) being used to encode the received signal and output a digital signal; and
a storing module (24) connected to an output of the encoding module (18), the storing module (24) being used for storing the digital signal output from the encoding module (18).

2. The portable device (10) of claim 1 further **characterized by** an AD converter (16) connected to the receiving module (12) and to the encoding module (18) for transforming a received analog signal into a digital signal that is transmitted to the encoding module (18).

3. The portable device (10) of claim 1 further **characterized in that** the signal received by the input of the encoding module (18) is the first decoded signal output by the first decoding module (14) or the digital signal output from an AD converter (16).

4. The portable device (10) of claim 1 further **characterized by** a second decoding module (22) connected to the storing module (24) and the displaying module (20), for decoding the digital signal stored in the storing module (24) and outputting the second decoded signal.

5. The portable device (10) of claim 1 further **characterized in that** the displaying module (20) comprises a display.

6. The portable device (10) of claim 1 further **characterized in that** the displaying module (20) comprises a speaker.

7. The portable device (10) of claim 1 further **characterized in that** the encoding module (18) encodes a signal according to an MPEG4 encoding method.

8. The portable device (10) of claim 1 further **characterized in that** the portable device (10) is a PDA.

9. The portable device (10) of claim 1 further **characterized in that** the portable device (10) is a mobile phone.

10. The portable device (10) of claim 1 further **characterized in that** an output port (26) is connected to the encoding module (18) for outputting the digital signal of the encoding module (18).

11. A portable device (30) for watching TV programs, the portable device (30) comprising:
a TV tuner (32) for receiving an input signal;
an image decoder (34) connected to the TV tuner (32) for decoding the input signal and outputting a first decoded signal;
a CPU (48); and
a display (46) electrically connected to the CPU (48);
**characterized by**:
an encoder (40) electrically connected to the CPU (48) and to the image decoder (34) for encoding the first decoded signal and outputting a digital signal; and
a memory (44) electrically connected to the CPU (48)and the encoding module (40), the memory (44) storing the digital signal.

12. The portable device (30) of claim 11 further **characterized by** a selector (36) connected to the TV tuner (32) for choosing an audio or a video signal that is sent to an AD converter 38 so that the audio or the video signal is transformed to a digital signal in the AD converter 38.

13. The portable device (30) of claim 11 further **characterized in that** the encoder 40 receives the digital signal outputted by the AD converter 38.

14. The portable device (30) of claim 11 further **characterized in that** the display (46) comprises a speaker.

15. The portable device (30) of claim 11 further **characterized in that** the encoder (40) encodes a signal according to an MPEG4 encoding method.

16. The portable device (30) of claim 11 further **characterized in that** the portable device (30) is a PDA.

17. The portable device (30) of claim 11 further **characterized in that** the portable device (30) is a mobile phone.

18. The portable device (30) of claim 11 further **characterized in that** a USB port (52) is electrically connected to the encoder (40), the CPU (48), and to the memory (44).

19. The portable device (30) of claim 11 further **characterized by** a transmitter (54) for transmitting the digital signal of the encoder (40) is electrically connected to the encoder (40), the CPU (48), and to the memory (44).
